**Europäisches Patentamt**

**European Patent Office**

**Office européen des brevets**

(19)

(11) Publication number : **0 474 579 A2**

## (12) EUROPEAN PATENT APPLICATION

(21) Application number : **91500097.0**

(22) Date of filing : **13.08.91**

(51) Int. Cl.⁵ : **B01D 53/34**

A request for correction of the translation of "hulla sub-bituminasa" has been filed pursuant to Rule 88 EPC. A decision on the request will be taken during the proceedings before the Examining Division (Guidelines for Examination in the EPO, A-V, 2.2).

(30) Priority : **20.08.90 ES 9002217**

(43) Date of publication of application :
**11.03.92 Bulletin 92/11**

(84) Designated Contracting States :
**AT BE CH DE DK FR GB GR IT LI LU NL SE**

(71) Applicant : **CARBONES PEDRAFORCA, S.A.**
**Pg. de la Paz, 7**
**E-08600 Berga (Barcelona) (ES)**

(72) Inventor : **Moreno Alvarez, Carlos**
**Paseo de la Paz, 7**
**ES-08600 Berga (Barcelona) (ES)**

(74) Representative : **Ponti Grau, Ignasi**
**Pg. de Gracia, 33**
**E-08007 Barcelona (ES)**

(54) **Procedure and device for the reduction of the content in lead and sulphur compounds in the exhaust gases of endothermic engines.**

(57) The gases flow through a bed of activated charcoal, with a base of lignitic coal, treated chemically by means of impregnation with specific substances for the adsorption of the lead compounds (oxygenated boron compound) or sulphur compounds (Lewis Acid type). The device is formed of a chamber (1), in which is housed the adsorption filtration mass (2), with inlet (4) and outlet (5) connected to circulation ducts (6, 7) which meet at their ends with the inlet ducts (8) and the outlet ducts (9) of the gases, with inserted intercommunication valves (10, 11, 12, 13).

EP 0 474 579 A2

The present invention refers to a procedure for the reduction of the content in lead and sulphur compounds in the exhaust gases of endothermic engines, in order to avoid their projection to the atmosphere, with all the harmful effects which this can involve.

The invention also refers to the device appropriate for the carrying out of said procedure.

## BACKGROUND OF THE INVENTION

The elimination, or at least the maximum reduction, of the lead and sulphur compounds contained in the exhaust gases of all types of endothermic engines, both explosion and internal combustion types, is a problem which has still not been resolved effectively from a technical point of view. The passage of these exhaust gases into the atmosphere, with a high content of lead and sulphur compounds, raises a series of serious problems deriving from environmental pollution and contamination, which reaches truly alarming levels, especially in urban centres, with large industrial areas, in which the concentration of emission sources represents a continuous and ever-increasing risk.

In respect of the content in lead compounds, at least two procedures are already known in the art, developed respectively by Texaco Oil Co. and by Ethyl Corp., both being based on the utilization of catalyser-filters based on steel wool and alumina, with which only retentions ranging between 50% and 65% of the lead content in the exhaust gases of petrol engines can be achieved, since there occurs a premature "poisoning" of said catalysers, which renders them unusable in short time.

As will be understood, the retention thus obtained is scant and does not provide a solution to the problem raised above.

Furthermore, no description has been provided of any process for the elimination of sulphur compounds, present especially in the exhaust gases of ignition by compression (diesel) engines, in which gas oil is used as fuel, so this problem remains a pending theme for technicians and also contributes to a worsening of ecological conditions.

## DESCRIPTION OF THE INVENTION

The present invention is directed at a solution to the problems raised by the elimination of the aforesaid lead and sulphur compounds, with reference to a procedure which, with slight variations, can be applied in a similar manner and with the same systematic basis to both types of compounds.

In accordance with the invention, the procedure object of same is based on a mixed process of ultra-microfiltration and adsorption, which comprises molecular sieving of the exhaust gases and selective adsorption of the lead and sulphur compounds, by means of the flow of the exhaust gases through a bed of activated charcoal based on lignitic coal, treated chemically by means of impregnation with specific substances for the adsorption of lead or sulphur compounds.

A compound of high electronic density is used for impregnation of the lead compounds adsorption mass, in order to induce polarity into the adsorption mass, said compound being of the boron or nitrogen families, while for the sulphur compounds a substance of the Lewis Acid type, capable of accepting an electron pair, is used.

The invention also refers to a device for application of the procedure in question, which device is composed of a chamber, in which is housed the impregnated adsorption filtration mass, with inlet and outlet connected respectively to circulation ducts which link or meet with the inlet duct of the exhaust gases and the outlet ducts of the same, by then purified, exhaust gases, which ducts are provided with intercommunication valves located between the outlet and/or inlet of the adsorption chamber and the ends of each of the ducts which meet with the exhaust gases inlet and outlet ducts.

## DESCRIPTION OF THE DRAWINGS

For a better understanding of all that has been set forth, there are attached some drawings in which, in a purely schematic way and only by way of example, without any restrictive character whatsoever, a device is shown which is suitable for carrying out the procedure object of the invention.

## DESCRIPTION OF A PREFERRED EMBODIMENT

As can be seen from the drawings, the device in question consists of a chamber -1-, in which is housed the impregnated adsorption filtration mass -2-, contained inside a cartridge or the like -3-. The body of the chamber -1- in which the filter -2- is contained has openings -4- and -5- placed opposite to each other and connected respectively to circulation ducts -6- and -7-, which link or meet with the inlet ducts -8- of the exhaust gases and the outlet ducts -9- of the same, by then purified, exhaust gases, which ducts are provided with intercommunication valves -10-11-12-13-, located between the outlet and/or inlet of the adsorption chamber itself and the ends of each of the ducts -6-7- which meet with the exhaust gases inlet -8- and outlet -9- ducts.

The device thus arranged, the procedure object of the invention is carried out in the following way:

The cartridge -3- is filled with a mass -2- of activated lignitic coal, chemically impregnated and with an adsorption surface between 1000 and 1500 m2/g of substance, a pore volume with respect to particle volume of the order of 50% and a pore diameter ranging between 1 and 500 Angström, sufficient for adsorption of both the lead bromide and the sulphur dioxide molecules in the exhaust gases, which have an equivalent diameter of the order of 6 to 10 Angströms.

In the case of treatment of the lead compounds, the mass of lignitic coal-based activated charcoal is treated chemically, impregnating it with a compound of high electronic density in order to induce polarity in the adsorption mass, which can be of the families of boron or of nitrogen, which adheres to the surface of the activated charcoal and facilitates the union of the lead bromide by adsorption.

In the case of treatment of sulphur compounds, the mass of activated charcoal of lignitic coal is impregnated with a substance of the Lewis Acid type, capable of accepting an electron pair, in order to enhance adsorption of the sulphur dioxide molecules.

In both cases, with the device arranged in this way, duct -8- is connected to the intake of gases to be purified and, keeping valves -10- and -13- closed, said gases are forced to follow a circuit through -8-11-2-12-9-, said gases emerging purified through duct -9- after having passed through the cartridge -3- which contains the microfiltrating mass -2-.

If valves -11- and -12- are shut, the circuit is established, with similar result, through -8-13-2-10-9-.

Optimum purification of the treated gases is obtained in both cases, of up to 90% or more, a figure impossible to achieve with the usual procedures currently applied.

The procedure described can be applied to any type of installation in which endothermic engines are used, whether the engines be explosion or internal combustion engines, thus proving to be of undeniable value in industrial zones, for elimination of the risks of environmental pollution, without ruling out household applications in heating installations using heavy fuels such as gas oil and the like.

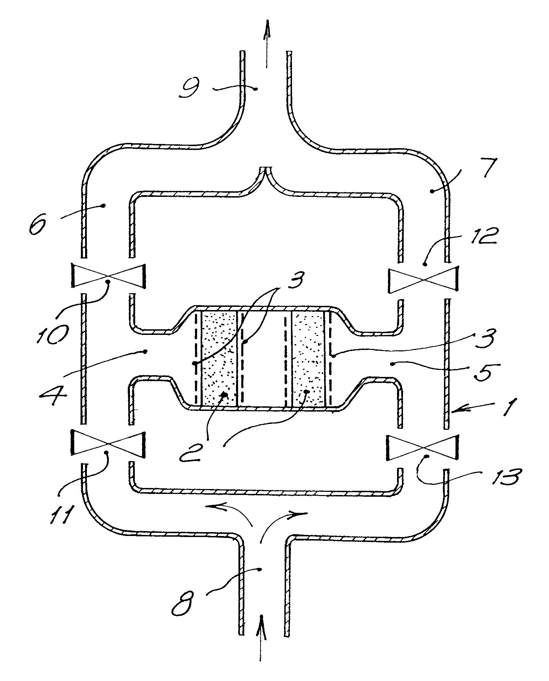

## Claims

1. Procedure for the reduction of the content in lead and sulphur compounds in the exhaust gases of endothermic engines, by microfiltering of the exhaust gases and selective adsorption of the lead and sulphur compounds, which is characterised in that the exhaust gases flow through a bed of activated charcoal based on lignitic coal, treated chemically by means of impregnation with specific substances for the adsorption of lead or sulphur compounds.

2. Procedure, as claimed in the previous claim, characterized in that an oxygenated compound of boron, of high electronic density, is used for impregnation of the adsorption mass of the lead compounds, while for treatment of the sulphur compounds a substance of the Lewis Acid type is used.

3. Device for the reduction of the content in lead and sulphur compounds in the exhaust gases of endothermic engines, for application of the procedure according to claims 1 and 2, characterized in that it comprises a chamber (1), in which is housed the impregnated filtration mass (2) for adsorption, which chamber presents inlet (4) and outlet (5) connected respectively to circulation ducts (6, 7) which link or meet at their ends with the inlet ducts (8) of the exhaust gases and the outlet ducts (9) of the same, by then purified, exhaust gases, which circulation ducts are provided with intercommunication valves (10, 11, 12, 13) located between the outlet and/or inlet of the adsorption chamber and the ends of each of the ducts which meet with the inlet and outlet ducts of exhaust gases.